(19) Europäisches Patentamt
European Patent Office
Office européen des brevets

(11) **EP 3 748 157 A1**

(12) **EUROPEAN PATENT APPLICATION**
published in accordance with Art. 153(4) EPC

(43) Date of publication:
**09.12.2020 Bulletin 2020/50**

(51) Int Cl.:
***F04B 27/18*** *(2006.01)*          ***F16K 31/06*** *(2006.01)*

(21) Application number: **19743098.6**

(86) International application number:
**PCT/JP2019/000120**

(22) Date of filing: **08.01.2019**

(87) International publication number:
**WO 2019/146388 (01.08.2019 Gazette 2019/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2018 JP 2018012181**

(71) Applicant: **Fujikoki Corporation
Tokyo 158-0082 (JP)**

(72) Inventors:
• **ASANO, Hisashi**
  Tokyo 158-0082 (JP)
• **ITOH, Masaharu**
  Tokyo 158-0082 (JP)
• **TANO, Shintaro**
  Tokyo 158-0082 (JP)
• **ASANO, Hirotaka**
  Tokyo 158-0082 (JP)

(74) Representative: **Ter Meer Steinmeister & Partner
Patentanwälte mbB
Artur-Ladebeck-Strasse 51
33617 Bielefeld (DE)**

(54) **CONTROL VALVE FOR VARIABLE DISPLACEMENT COMPRESSOR**

(57) Provided is a variable-capacity compressor control valve that can cancel the influence of the refrigerant pressure acting on a main valve element without increasing the size of a valve body. A main valve element 10 is provided with a suction pressure passage 14 adapted to guide a suction pressure Ps acting on the upper end of the main valve element 10 to a Ps introduction chamber 24A provided at the lower end of the main valve element 10 so that the suction pressure Ps acts on the lower end of the main valve element 10. A cross-sectional area Ab of a lower fit-inserted portion 10b of the main valve element 10, an effective opening area Ac of a valve orifice 22, and a cross-sectional area Ad of an upper fit-inserted portion 10d are equal to one another.

Fig. 4

**Description**

Technical Field

The present invention relates to a variable-capacity compressor control valve for use in an automotive air conditioner, for example. In particular, the present invention relates to a variable-capacity compressor control valve in which the influence of the refrigerant pressure acting on a valve element can be cancelled.

Background Art

Usually, a control valve for a variable-capacity compressor used for an automotive air conditioner, for example, is adapted to receive a discharge pressure Pd from a discharge chamber of the compressor and control a pressure Pc in a crank chamber by controlling the discharge pressure Pd in accordance with a suction pressure Ps of the compressor. Typically, such a control valve has, as seen in Patent Literature 1 below, for example, a valve body that includes a valve chamber with a valve orifice, a Ps inlet/outlet port communicating with the suction chamber of the compressor, a Pd introduction port arranged upstream of the valve orifice and communicating with the discharge chamber of the compressor, and a Pc inlet/outlet port arranged downstream of the valve orifice and communicating with the crank chamber of the compressor; a main valve element (i.e., a valve stem) for opening or closing the valve orifice; an electromagnetic actuator with a plunger for moving the main valve element in the direction to open or close the valve orifice; a pressure-sensitive chamber adapted to receive the suction pressure Ps from the compressor via the Ps inlet/outlet port; and a pressure-sensitive reaction member, such as a bellows device, adapted to urge the main valve element in the direction to open or close the valve orifice in accordance with the pressure in the pressure-sensitive chamber.

A variable-capacity compressor control valve described in Patent Literature 2 below includes, in addition to the aforementioned configuration, an in-valve release passage for releasing the pressure Pc in the crank chamber to the suction chamber of the compressor via the Ps inlet/outlet port, and a sub valve element (i.e., a ball valve element) for opening or closing the in-valve release passage. When the plunger is continuously moved upward from the lowest position due to the attraction force of the electromagnetic actuator, the sub valve element moves upward together with the plunger while closing the in-valve release passage, and the main valve element is also moved upward so as to follow the sub valve element. Then, after the valve orifice is closed by the main valve element, if the plunger is further moved upward, the sub valve element is caused to open the in-valve release passage.

Citation List

Patent Literature

   Patent Literature 1: JP 5553514 B
   Patent Literature 2: JP 4550651 B

Summary of Invention

Technical Problem

By the way, in the variable-capacity compressor control valves of this type, when there is a difference between the force in a direction to open the valve and the force in a direction to close the valve due to the refrigerant pressure acting on the main valve element (i.e., the valve stem), control of the valve may be adversely affected (e.g., control accuracy may be reduced) (see Patent Literature 2, for example). Thus, for example in the conventional variable-capacity compressor control valve disclosed in Patent Literature 1, the lower end of the main valve element faces a Ps introduction chamber that is adapted to receive the suction pressure Ps so that the suction pressure Ps acts on the lower end of the main valve element. Further, the valve body includes a suction pressure passage that is adapted to receive the suction pressure Ps of the compressor so that the suction pressure Ps is guided to the pressure-sensitive reaction member and the suction pressure Ps acts on the upper end of the main valve element. Thus, it is less likely that the refrigerant pressure acting on the main valve element adversely affects the control of the valve.

However, in the conventional variable-capacity compressor control valve disclosed in Patent Literature 1, since the valve body is provided with the Ps introduction chamber that is adapted to receive the suction pressure Ps of the compressor and also provided with the suction pressure passage that is adapted to guide the suction pressure Ps of the compressor to the pressure-sensitive reaction member, the size of the valve body may be increased.

The present invention has been made in view of the foregoing, and it is an object of the present invention to provide a variable-capacity compressor control valve that can cancel the influence of the refrigerant pressure acting on the main valve element without increasing the size of the valve body.

Solution to Problem

To achieve the aforementioned objects, a variable-capacity compressor control valve according to the present invention basically includes: a main valve element including a main valve element portion; a valve body including a valve chamber with a valve orifice, the valve orifice being adapted to be in contact with or away from the main valve element portion, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; an electromagnetic actuator adapted to move the main valve element in a direction to open or close the valve orifice; a pressure-sensitive chamber adapted to receive a suction pressure Ps from the compressor via the Ps inlet/outlet port; and a pressure-sensitive reaction member adapted to urge the main valve element in the direction to open or close the valve orifice in accordance with a pressure in the pressure-sensitive chamber, in which the Ps inlet/outlet port or the pressure-sensitive chamber is provided at one end of the main valve element so that the suction pressure Ps acts on the one end of the main valve element, and the main valve element is provided with a suction pressure passage, the suction pressure passage being adapted to guide the suction pressure Ps to a Ps introduction chamber provided at another end of the main valve element, so that the suction pressure Ps acts on the other end of the main valve element.

In a preferable aspect, a first guide hole through which a first fit-inserted portion of the main valve element is slidably fitted and inserted is provided closer to a first end of the valve body with respect to the valve orifice; a second guide hole through which a second fit-inserted portion of the main valve element is slidably fitted and inserted is provided closer to a second end of the valve body with respect to the valve orifice; the Ps inlet/outlet port or the pressure-sensitive chamber is provided closer to a first end of the first guide hole; the Ps introduction chamber is provided closer to a second end of the second guide hole; and a cross-sectional area of the first fit-inserted portion of the main valve element, a cross-sectional area of the second fit-inserted portion of the main valve element, and an opening area (that is, a pressure receiving area or an effective opening area) of the valve orifice are equal to one another so that a force in a valve-opening direction and a force in a valve-closing direction due to a refrigerant pressure acting on the main valve element are equal to one another.

In further preferable aspect, a lid-like guide member including the second guide hole is hermetically and securely attached to the valve body to form the Ps introduction chamber.

In another preferable aspect, an urging member adapted to urge the main valve element in the valve-closing direction is mounted in the Ps introduction chamber.

In still another preferable aspect, the main valve element includes a tubular member including the main valve element portion and a shaft-shaped member adapted to be securely fitted into the tubular member, and the suction pressure passage is formed between the tubular member and the shaft-shaped member.

In yet another preferable aspect, the suction pressure passage is provided to extend linearly in a direction to open or close the valve orifice.

In yet another preferable aspect, the variable-capacity compressor control valve further includes an in-valve release passage provided in the main valve element or the valve body, the in-valve release passage being adapted to release a pressure Pc in the crank chamber to the suction chamber of the compressor via the Ps inlet/outlet port; and a sub valve element adapted to open or close the in-valve release passage.

In yet another preferable aspect, the in-valve release passage is adapted to include a release through-hole shaped into a crank shape in the main valve element.

In yet another preferable aspect, the variable-capacity compressor control valve further includes an in-valve release passage in the main valve element, the in-valve release passage being adapted to release a pressure Pc in the crank chamber to the suction chamber of the compressor via the Ps inlet/outlet port; and a sub valve element adapted to open or close the in-valve release passage, wherein the main valve element includes the tubular member including the main valve element portion and the shaft-shaped member adapted to be securely fitted into the tubular member; the suction pressure passage is formed between the tubular member and the shaft-shaped member; and the in-valve release passage includes a vertical hole provided in the shaft-shaped member.

Advantageous Effects of Invention

According to the present invention, a main valve element is provided with a suction pressure passage adapted to guide a suction pressure Ps acting on one end of the main valve element to a Ps introduction chamber provided at the other end of the main valve element so that the suction pressure Ps acts on the other end of the main valve element.

Therefore, as compared to the conventional control valve including a valve body that is provided with a suction pressure passage and the like, for example, it is possible to cancel the influence of the refrigerant pressure acting on the main valve element without increasing the size of the valve body.

More specifically, one end of the main valve element is adapted to have the suction pressure Ps acting thereon, the other end of the main valve element is provided with the Ps introduction chamber adapted to receive the suction pressure Ps, and the main valve element is provided with the suction pressure passage adapted to guide the suction pressure Ps to the Ps introduction chamber. Therefore, when the cross-sectional area of a first fit-inserted portion of the main valve element, the cross-sectional area of a second fit-inserted portion of the main valve element, and the opening area (i.e., the pressure receiving area or the effective opening area) of the valve orifice are equal to one another, the force in the valve-opening direction and the force in the valve-closing direction due to the refrigerant pressure acting on the main valve element may be brought into balance (cancel out each other). Thus, it is less likely that the refrigerant pressure acting on the main valve element adversely affects the control of the valve.

In addition, the main valve element includes a tubular member including a main valve element portion and a shaft-shaped member adapted to be securely fitted into the tubular member, and the suction pressure passage is formed between the tubular member and the shaft-shaped member. Therefore, the suction pressure passage can be formed with such a simple structure, and the influence of the refrigerant pressure acting on the main valve element can be cancelled.

Furthermore, the in-valve release passage for releasing the pressure Pc in the crank chamber of the compressor to the suction chamber of the compressor via the Ps inlet/outlet port is provided in the main valve element or the valve body, and the sub valve element for opening or closing the in-valve release passage is provided. Such a simple structure can improve the actuation of the control valve.

Brief Description of Drawings

Fig. 1 is a longitudinal sectional view of one embodiment of the variable-capacity compressor control valve according to the present invention in which a main valve element is in the open position and a sub valve element is in the closed position (i.e., during the normal control time).

Fig. 2 is a longitudinal sectional view of one embodiment of the variable-capacity compressor control valve according to the present invention in which the main valve element is in the closed position and the sub valve element is in the closed position (i.e., during the time of transition to compressor actuation).

Fig. 3 is a longitudinal sectional view of one embodiment of the variable-capacity compressor control valve according to the present invention in which the main valve element is in the closed position and the sub valve element is in the open position (i.e., during the compressor actuation time).

Fig. 4 is an enlarged longitudinal sectional view of the main part of Fig. 1.

Description of Embodiments

Hereinafter, embodiments of the present invention will be described with reference to the drawings.

<First embodiment>

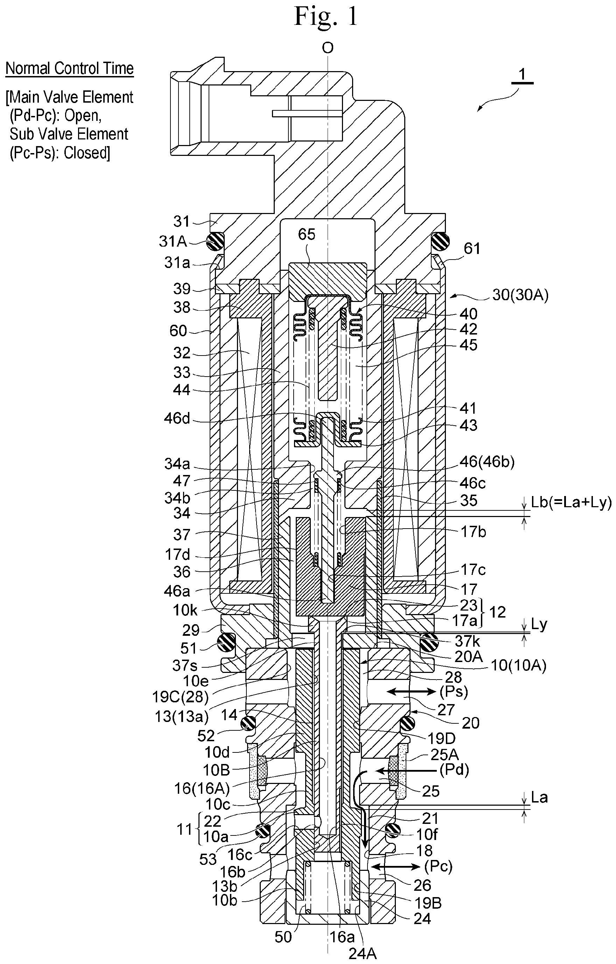

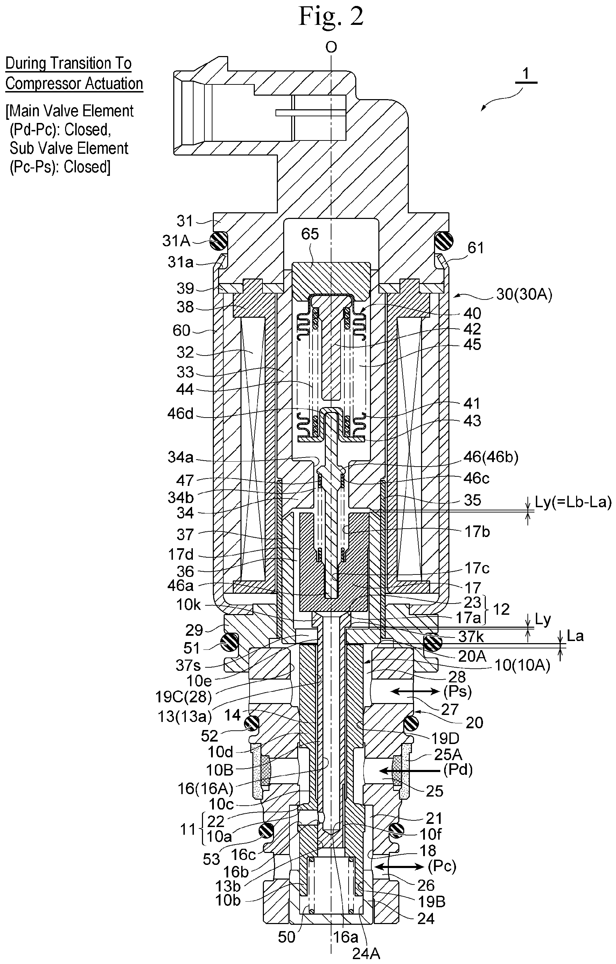

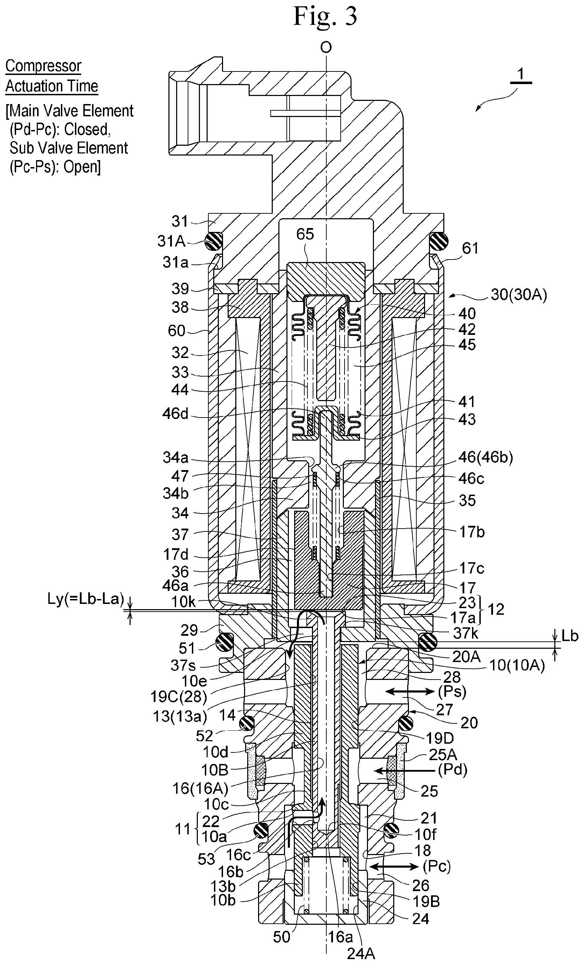

Fig. 1 to Fig. 3 are longitudinal sectional views of one embodiment of the variable-capacity compressor control valve according to the present invention. Fig. 1 shows a state in which the main valve element is in the open position and the sub valve element is in the closed position (i.e., during the normal control time). Fig. 2 shows a state in which the main valve element is in the closed position and the sub valve element is in the closed position (i.e., during the time of transition to compressor actuation). Fig. 3 shows a state in which the main valve element is in the closed position and the sub valve element is in the open position (i.e., during the compressor actuation time).

It should be noted that in the present specification, descriptions indicating the positions or directions, such as upper, lower, top, bottom, left, right, front, and rear, are used for the sake of convenience in accordance with the drawings to avoid complexity in the description, but such descriptions do not necessarily indicate the actual positions or directions when the control valve of the present invention is incorporated into a compressor.

In addition, in each drawing, a gap formed between some members, a clearance between some members, and the like may be depicted larger or smaller than their actual dimensions to help understand the invention and also for the sake of convenience to create the drawing.

[Configuration of control valve 1]

A control valve 1 of the embodiment illustrated in the drawings basically includes a valve body 20 with a valve orifice 22, a main valve element 10 for opening or closing the valve orifice 22, an electromagnetic actuator 30 for moving the main valve element 10 in the direction to open or close the valve orifice (i.e., in the vertical direction), and a bellows device 40 serving as a pressure-sensitive reaction member.

The electromagnetic actuator 30 includes a bobbin 38, an energization coil 32 wound around the bobbin 38, a stator 33 and an attractor 34 arranged on the inner periphery side of the coil 32, a guide pipe 35 with its upper end joined by welding to the outer periphery of the lower end (i.e., a step portion) of the stator 33 and the attractor 34, a closed-bottomed cylindrical plunger 37 arranged such that it is vertically slidable on the inner periphery side of the guide pipe 35 below the attractor 34, a cylindrical housing 60 with a bottom hole externally arranged around the coil 32, a connector portion 31 attached to the upper side of the housing 60 with interposed therebetween an attachment plate 39, and a holder 29 disposed between the lower end (i.e., a bottom hole) of the housing 60 and the lower end of the guide pipe 35 and adapted to fix them to the upper portion of the valve body 20. In this example, the cylindrical attractor 34 with an insertion through-hole 34a formed in the center (along the axis O) thereof, which has a smaller diameter than the inside diameter of the stator 33, is integrally molded with the inner periphery of the lower portion of the cylindrical stator 33. A ringshaped attachment plate 39 is disposed between the outer periphery step portion formed on the upper portion of the stator 33 and the inner periphery step portion formed on the upper portion of the housing 60. The upper end (i.e., a thin portion) of the housing 60 is fixed by swaging (i.e., a swaging portion 61) to an annular fit recess groove 31a that is provided on the outer periphery of the connector portion 31 to mount an O ring 31A as a sealing member. Herein, a portion of the electromagnetic actuator 30 including the coil 32, the stator 33, the attractor 34, and the like and excluding the plunger 37 is referred to as a "solenoid portion 30A."

A short columnar stator 65 is securely attached to the upper portion of the stator 33 by press fitting, for example, and a pressure-sensitive chamber 45, which is adapted to receive a suction pressure Ps in a compressor, is formed between the stator 65 and the attractor 34 on the inner periphery side of the stator 33. The pressure-sensitive chamber 45 has arranged therein the bellows device 40 as the pressure-sensitive reaction member that includes bellows 41, a downwardly projecting upper stopper 42, a downwardly recessed lower stopper 43, and a compression coil spring 44. Further, a stepped, bar-like pushrod 46, which is a thrust transmitting member, is disposed along the axis O below the bellows device 40. A portion around the center of the pushrod 46 has a large diameter (i.e., a large-diameter portion 46b). An upper end 46d of the pushrod 46 is fitted and inserted into the recess portion of the lower stopper 43 and thus is supported therein, while the large-diameter portion 46b of the pushrod 46 is inserted through the insertion through-hole 34a of the attractor 34 (with a small gap 34b therebetween). The lower portion of the pushrod 46 is inserted into a recess hole 17b of a sub valve element 17 with a recessed cross-section described below, and the lower end 46a thereof is fitted into a recessed fit-insertion hole 17c formed in the center of the bottom of the recess hole 17b.

The sub valve element 17 with the recessed cross-section, which has the recess hole 17b with an approximately equal diameter to that of the insertion through-hole 34a of the attractor 34, is securely inserted into the plunger 37 by press fitting, for example, such that the sub valve element 17 and the plunger 37 vertically move at the same time. The sub valve element 17 is fitted into the plunger 37 such that the upper end of the sub valve element 17 is aligned with the upper end of the plunger 37 (i.e., the upper end of the sub valve element 17 is positioned with respect to the inner periphery of the upper end of the plunger 37), while the lower end of the sub valve element 17 is spaced apart from the bottom of the plunger 37 (with a gap that allows a flanged latch portion 10k of the main valve element 10 (a shaft-shaped member 10B thereof) to slightly move vertically, which will be described in detail later). The recessed fit-insertion hole 17c, which is adapted to have the lower end 46a of the pushrod 46 fitted and inserted therein, is formed in the center of the bottom of the recess hole 17b of the sub valve element 17.

A plunger spring (i.e., a valve-opening spring) 47, which is a cylindrical compression coil spring, is provided in a compressed state between a step portion (i.e., an annular terrace face facing downward) 46c formed on the upper portion of the large-diameter portion 46b of the pushrod 46 and the bottom of the recess hole 17b (i.e., a face thereof facing upward around the fit-insertion hole 17c) of the sub valve element 17 fitted in the plunger 37. With the plunger spring 47 (or the compression force thereof), the plunger 37 is urged downward (i.e., in the direction to open the valve) via the sub valve element 17, and the bellows device 40 is held within the pressure-sensitive chamber 45 via the pushrod 46. With the plunger spring 47 (or the compression force thereof), the sub valve element 17 is urged in the direction to close an in-valve release passage 16 (i.e., a release through-hole 16A) (described later). The lower end (i.e., a planar face) of the sub valve element 17 serves as a sub valve element portion 17a that opens and closes the in-valve release passage 16 (which will be described in detail later).

The plunger 37 has formed at its bottom a slit 37s with a through hole that extends linearly from the outer periphery thereof to the center (on the axis O) and passes therethrough the flanged latch portion 10k of the main valve element 10 (or the shaft-shaped member 10B thereof). The height (in the vertical direction) of the slit 37s (i.e., the thickness (or the height in the vertical direction) of the bottom of the plunger 37) is set slightly smaller than the height of an upper small-diameter portion 10e of the main valve element 10 so that the main valve element 10 is vertically movable with respect to the plunger 37 (this will be described in detail later). In addition, the width (in the horizontal direction) of the slit 37s is set slightly larger than the outside diameter of the upper small-diameter portion 10e of the main valve element 10 (i.e., the outside diameter of the shaft-shaped member 10B included in the main valve element 10) and smaller than the outside diameter of the flanged latch portion 10k of the main valve element 10, taking into consideration the assembly property and the like. The outer periphery portion of the slit 37s at the upper face of the bottom of the plunger 37 serves as an inner flanged latch portion 37k to which the flanged latch portion 10k of the main valve element 10 is adapted to be latched.

In this example, a D-cut surface or a communication groove 17d including one or more of vertical grooves, for example, is formed in a predetermined position (i.e., above the slit 37s in the example illustrated in the drawing) on the outer periphery of the sub valve element 17. The communication groove 17d serves to form a gap 36 between the outer periphery of the sub valve element 17 and the inner periphery of the plunger 37.

It should be noted that the communication groove 17 may be provided on the outer periphery of the plunger 37 and the gap 36 may be formed between the outer periphery of the plunger 37 and the inner periphery of the guide pipe 35.

The main valve element 10 disposed below the plunger 37 and the sub valve element 17 is made of non-magnetic metal, for example, and has a two-component configuration including a stepped cylindrical tubular member 10A disposed along the axis O and a shaft-shaped member 10B securely inserted into a fit-insertion hole 13 that is provided in the center (i.e., along the axis O) of the tubular member 10A.

The tubular member 10A includes, from the lower side, a lower fit-inserted portion 10b, a main valve element portion 10a having a slightly larger diameter than that of the lower fit-inserted portion 10b, an intermediate small-diameter portion 10c having a smaller diameter than those of the lower fit-inserted portion 10b and the main valve element portion 10a, and an upper fit-inserted portion 10d. In this example, the outside diameter (i.e., the cross-sectional area) of the lower fit-inserted portion 10b is approximately equal to the outside diameter (i.e., the cross-sectional area) of the upper fit-inserted portion 10d (which will be described later in detail).

Furthermore, the fit-insertion hole 13 formed in the tubular member 10A includes a lower small-diameter hole 13b having substantially the same diameter as that of the shaft-shaped member 10B and an upper large-diameter hole 13a having a slightly larger diameter than that of the shaft-shaped member 10B. In this example, a portion corresponding to the lower fit-inserted portion 10b and the main valve element portion 10a of the tubular member 10A is the lower small-diameter hole 13b, whereas a portion corresponding to the intermediate small-diameter portion 10c and the upper fit-inserted portion 10d of the tubular member 10A is the upper large-diameter hole 13a. The shaft-shaped member 10B at its upper end is provided with the flanged latch portion 10k having a relatively large diameter (and a smaller diameter than the outside diameter of the sub valve element 17), and is inserted into the upper large-diameter hole 13a (with an annular gap) such that the upper portion including the flanged latch portion 10k protrudes. The lower portion of the shaft-shaped member 10B is securely fitted into the lower small-diameter hole 13b by press fitting, for example, so that the tubular member 10A and the shaft-shaped member 10B are integrated.

A portion protruding from the fit-insertion hole 13 of the shaft-shaped member 10B (more specifically, the upper small-diameter portion 10e including the portion between the flanged latch portion 10k of the shaft-shaped member 10B and the upper end (i.e., the upper fit-inserted portion 10d) of the tubular member 10A) is loosely fitted into the slit 37s of the plunger 37, and the flanged latch portion 10k above the upper small-diameter portion 10e is loosely fitted on the inner side of the plunger 37 below the sub valve element 17 (i.e., in a space between the bottom of the plunger 37 and the lower end of the sub valve element 17). As described above, the flanged latch portion 10k has a larger diameter than the width of the slit 37s. When the plunger 37 is moved upward with respect to the main valve element 10, the inner flanged latch portion 37k made of the outer periphery portion of the slit 37s is latched to the flanged latch portion 10k, and thus, latching is achieved and slippage is prevented.

In this example, the outer periphery of the lower portion of the shaft-shaped member 10B (i.e., the portion to be fitted into the lower small-diameter hole 13b) is provided with one or more of vertical grooves 10f that extend upwardly from the lower end toward the upper large-diameter hole 13a. With the vertical grooves 10f, a gap extending in the vertical direction is formed between the outer periphery of the shaft-shaped member 10B and the inner periphery of the tubular member 10A (i.e., the lower small-diameter hole 13b).

Meanwhile, the valve body 20 is made of metal such as stainless steel (SUS), high hardness brass, aluminum, for example. The upper end (face) of the valve body 20 serves as a stopper portion 20A for defining the lowest position of the plunger 37.

The valve body 20 includes a lower guide hole 19B through which the lower fit-inserted portion 10b of the main valve element 10 (or the tubular member 10A thereof) is slidably fitted and inserted, and an upper guide hole 19D through which the upper fit-inserted portion 10d of the main valve element 10 (or the tubular member 10A thereof) is slidably fitted and inserted. The valve body 20 also includes a valve chamber 21 provided with the valve orifice (i.e., the valve seat portion) 22 that is opened or closed by the main valve element portion 10a of the main valve element 10 between the lower guide hole 19B and the upper guide hole 19D. In this example, the main valve element portion 10a and the valve orifice 22 form a main valve unit 11.

More specifically, the center of the lower portion of the valve body 20 is provided with an insertion through-hole 18, which has a larger diameter than those of the upper guide hole 19D and the main valve element portion 10a, for allowing the main valve element 10 to be inserted into the insertion through-hole 18 when assembled. To the lower portion of the insertion through-hole 18, a closed-bottomed cylindrical lid-like guide member 24 (that is, with a recessed cross-section) is hermetically and securely inserted (securely attached) by press fitting, for example. The inner periphery of the lid-like guide member 24 serves as the lower guide hole 19B through which the lower fit-inserted portion 10b of the main valve element 10 (the tubular member 10A thereof) is slidably fitted and inserted. A Ps introduction chamber 24A to which a suction pressure Ps is introduced via a suction pressure passage 14 (described later) is formed between the lid-like guide member 24 (or the inner surface thereof) and the lower end of the main valve element 10 (i.e., the lower fit-inserted portion 10b) (i.e., below the lower guide hole 19B). Furthermore, a valve-closing spring (i.e., an urging member) 50, which is a cylindrical compression coil spring, is provided in a compressed state (or mounted) between the bottom of the lid-like guide member 24 and the lower end of the main valve element 10 (more specifically, a spring receiving hole provided in the lower portion of the lower fit-inserted portion 10b) (that is, inside of the Ps introduction chamber 24A). With the urging force of the valve-closing spring 50, the main valve element 10 is urged (upward) in the valve-closing direction, and the upper end of the main valve element 10 (the flanged latch portion 10k thereof) is pressed against the lower end of the sub valve element 17 (i.e., the sub valve element portion 17a).

A stepped portion formed between the insertion through-hole 18 and the upper guide hole 19D serves as the valve orifice 22 that is opened or closed by the main valve element portion 10a of the main valve element 10 that comes into contact with or away from the lower side.

The center of the upper portion of the valve body 20 is provided with a recess hole 19C, which has a larger diameter than that of the upper fit-inserted portion 10d of the main valve element 10 (the tubular member 10A thereof) and a smaller diameter than the outside diameter of the plunger 37. The upper end (i.e., the upper face) of the valve body 20 around the recess hole 19C serves as the stopper portion 20A. The upper guide hole 19D is continuously provided with the center of the bottom of the recess hole 19C.

The recess hole 19C (i.e., the outer periphery of the upper fit-inserted portion 10d of the main valve element 10 inserted through the recess hole 19C) serves as a Ps inlet/outlet chamber 28 for the suction pressure Ps in the compressor, and a plurality of Ps inlet/outlet ports 27 are formed on the outer periphery portion of the Ps inlet/outlet chamber 28. The suction pressure Ps that has been introduced into the Ps inlet/outlet chamber 28 (i.e., the inside of the recess hole 19C) from the Ps inlet/outlet ports 27 is introduced into the pressure-sensitive chamber 45 via the inside of the plunger 37 (i.e., the slit 37s, and the gap 36 formed between the sub valve element 17 and the plunger 37), the gap 34b formed between the outer periphery of the pushrod 46 and the attractor 34, and the like.

A plurality of Pd introduction ports 25 with a filter 25A communicating with the discharge chamber of the compressor are provided on the outer periphery portion (i.e., upstream of the valve orifice 22) of the lower portion (i.e., the portion into which the intermediate small-diameter portion 10c of the main valve element 10 is inserted) of the upper guide hole 19D. Meanwhile, a plurality of Pc inlet/outlet ports 26 communicating with the crank chamber of the compressor are provided on the outer periphery portion (i.e., downstream of the valve orifice 22) of the valve chamber 21 (i.e., the insertion through-hole 18). The Pc inlet/outlet ports 26 are adapted to communicate with the Pd introduction ports 25 via the valve chamber 21 → the gap between the valve orifice 22 and the main valve element portion 10a → the gap between the lower portion of the upper guide hole 19D and the intermediate small-diameter portion 10c.

The main parts of the outer periphery portion of the control valve 1 are provided with O-rings 51, 52, 53 as seal members so as to prevent leakage of the suction pressure Ps, the discharge pressure Pd, and the pressure Pc in the crank chamber.

Further, in the present embodiment, the release through-hole 16A for allowing the Pc inlet/outlet ports 26 and the Ps inlet/outlet chamber 28 (i.e., the Ps inlet/outlet ports 27) to communicate is provided in the main valve element 10.

More specifically, the center of the shaft-shaped member 10B included in the main valve element 10 is provided with a vertical hole 16a, which extends in the direction of the axis O from the upper end to the portion adjacent to the lower end (i.e., the main valve element portion 10a of the tubular member 10A), and also provided with a horizontal hole 16b, which extends from the portion adjacent to the lower end of the vertical hole 16a in a direction perpendicular to the direction of the axis O. Further, the main valve element portion 10a of the tubular member 10A arranged around the shaft-shaped member 10B is provided with a through hole 16c, which is a horizontal hole having a slightly larger diameter than that of the horizontal hole 16b, adapted to communicate with the horizontal hole 16b and to be open to the valve chamber 21 (and the Pc inlet/outlet ports 26). The through hole 16c of the tubular member 10A, and the horizontal hole 16b and the vertical hole 16a of the shaft-shaped member 10B form the release through-hole 16A that allows the Pc inlet/outlet ports 26 and the Ps inlet/outlet chamber 28 to communicate with each other. The release through-hole 16A partially forms the in-valve release passage 16, and the upper end of the release through-hole 16A (or the upper end of the vertical hole 16a) serves as a sub valve seat portion 23 with/from which the lower end (or the sub valve element portion) 17a of the sub valve element 17 is adapted to be moved into contact or away (this will be described in detail later). In this example, the sub valve seat portion 23 and the sub valve element portion 17a form the sub valve unit 12.

In the present embodiment, as described above, the in-valve release passage 16 for releasing the pressure Pc in the crank chamber to the suction chamber of the compressor via the Ps inlet/outlet ports 27 is formed by the Pc inlet/outlet ports 26, the valve chamber 21, the release through-hole 16A provided in the main valve element 10, the inside of the plunger 37, the Ps inlet/outlet chamber 28 (i.e., the inside of the recess hole 19C), and the like. The in-valve release passage 16 is adapted to be opened or closed as the sub valve element portion (or the lower end) 17a of the sub valve element 17 is moved into contact with or away from the sub valve seat portion (i.e., an inverted truncated cone portion) 23 that is the upper end edge of the release through-hole 16A of the main valve element 10.

Furthermore, in the present embodiment, in addition to the aforementioned configuration, the following measures are to be taken to bring into balance (i.e., to set off a pressure difference between) the force in the valve-opening direction (downward force) and the force in the valve-closing direction (upward force) due to the refrigerant pressure acting on the main valve element 10.

That is, the main valve element 10 has provided therein a suction pressure passage 14 for allowing the Ps inlet/outlet chamber 28 (or the Ps inlet/outlet ports 27) or the pressure-sensitive chamber 45 provided at the upper end side of the main valve element 10 to communicate with the Ps introduction chamber 24A provided at the lower end side of the main valve element 10.

More specifically, the suction pressure passage 14, which allows the Ps inlet/outlet chamber 28 (or the Ps inlet/outlet ports 27) or the pressure-sensitive chamber 45 to communicate with the Ps introduction chamber 24A, is formed by the upper large-diameter hole 13a of the tubular member 10A of the main valve element 10 and the vertical groove(s) 10f on the outer periphery of the lower portion of the shaft-shaped member 10B between the tubular member 10A and the shaft-shaped member 10B of the main valve element 10. In other words, in this example, the suction pressure passage 14 is disposed around the release through-hole 16A formed in the main valve element 10. The suction pressure passage 14 serves to guide the suction pressure Ps acting on the upper end side of the main valve element 10 to the Ps introduction chamber 24A provided at the lower end of the main valve element 10 so that the suction pressure Ps (continuously) acts on the lower end (i.e., the lower fit-inserted portion 10b) of the main valve element 10.

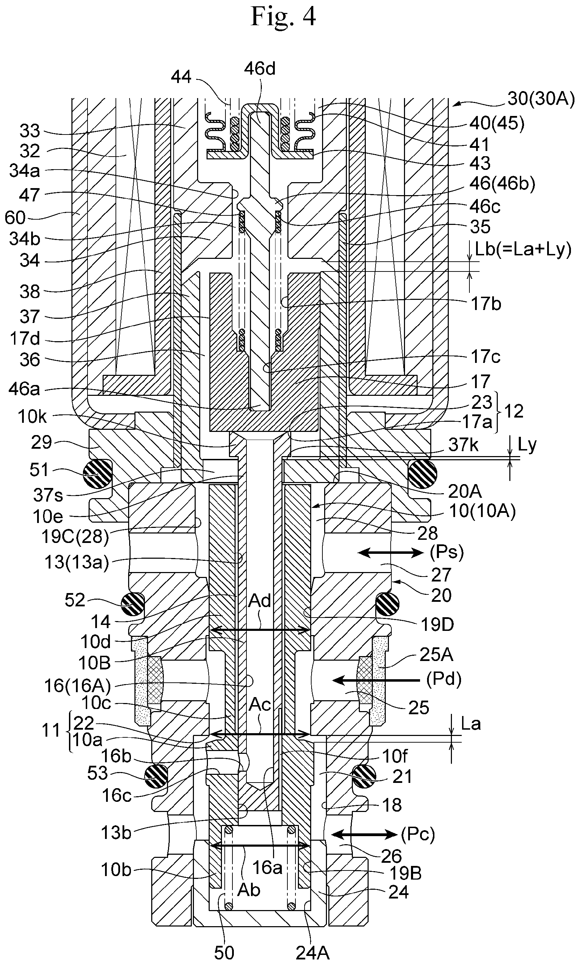

Further, the outside diameter (i.e., the cross-sectional area Ab) of the lower fit-inserted portion 10b of the main valve element 10 (i.e., the diameter (i.e., the opening area or the pressure receiving area) of the lower guide hole 19B), the diameter (i.e., the cross-sectional area or the effective opening area Ac) of the valve orifice 22, and the outside diameter (i.e., the cross-sectional area Ad) of the upper fit-inserted portion 10d of the main valve element 10 (i.e., the diameter (i.e., the opening area or the pressure receiving area) of the upper guide hole 19D) are approximately equal to one another (see Fig. 4).

In the control valve 1 with the aforementioned configuration, the force in the valve-opening direction (downward force) and the force in the valve-closing direction (upward force) due to the refrigerant pressure acting on the main valve element 10 are expressed by the following equations (see Fig. 4):

$$\text{The force applied in the valve-opening direction} = Ps \times Ad + Pd \times Ac + Pc \times Ab$$

$$\text{The force applied in the valve-closing direction} = Pd \times Ad + Pc \times Ac + Ps \times Ab$$

In this example, as described above, the cross-sectional area Ab of the lower fit-inserted portion 10b of the main valve element 10, the effective opening area Ac of the valve orifice 22, and the cross-sectional area Ad of the upper fit-inserted portion 10d of the main valve element 10 are substantially equal to one another (Ab=Ac=Ad). Therefore, the force applied in the valve-opening direction and the force applied in the valve-closing direction may be substantially brought into balance (cancel out each other).

It should be noted that in the aforementioned embodiment, although the main valve element 10 has a two-component configuration including the tubular member 10A and the shaft-shaped member 10B, and the suction pressure passage 14 which extends substantially linearly in the vertical direction (in the direction of the axis O, or the direction to open or close the valve orifice 22) is formed between the tubular member 10A and the shaft-shaped member 10B, it is needless to mention that the main valve element 10 may be formed as a unitary component, for example, and the suction pressure passage 14 may be formed inside of the main valve element 10.

Furthermore, in the aforementioned embodiment, although the in-valve release passage 16 for releasing the pressure Pc in the crank chamber to the suction chamber of the compressor via the Ps inlet/outlet ports 27 includes the release through-hole 16A, which is formed in a crank shape in the main valve element 10, it is needless to specifically explain that the in-valve release passage 16 may be provided on the valve body 20 side (not in the main valve element 10), for example. It is also needless to mention that the in-valve release passage 16 may be omitted.

It is also needless to mention that the method of forming the suction pressure passage 14 and the in-valve release passage 16 (or the release through-hole 16A), the shape, the arrangement, and the like thereof are not limited to those illustrated in the example.

In this example, in the control valve 1 of the present embodiment, when the plunger 37, the main valve element 10, and the sub valve element 17 are at the lowest position (when the bottom end face of the plunger 37 abuts the stopper portion 20A, the main valve unit 11 is in the fully open position, and the sub valve unit 12 is in the fully closed position) as illustrated in Fig. 1, the clearance in the vertical direction between the main valve element portion 10a of the main valve element 10 and the valve orifice (i.e., the valve seat portion) 22 is represented by a first lift amount La, and the clearance between the inner flanged latch portion 37k of the plunger 37 and the flanged latch portion 10k of the main valve element 10 is represented by a predetermined amount Ly. The maximum lift amount (i.e., second lift amount) Lb of the plunger 37 (i.e., the lift amount of from the lowest position to the highest position of the plunger 37) corresponds to the first lift amount La + the predetermined amount Ly.

[Operation of control valve 1]

Next, the operation of the control valve 1 with the aforementioned configuration will be briefly described.

It should be noted that in the control valve 1 of this example, the force in the valve-opening direction (downward force) and the force in the valve-closing direction (upward force) (that is, the force acting in the moving direction of the main valve element 10 (the direction of the axis O)) due to the refrigerant pressure acting on the main valve element 10 may be always brought into balance (cancel out each other) through the suction pressure passage 14.

During the normal control time (Pd → Pc control time), the lift amount of the plunger 37 (and the sub valve element 17) is slightly greater than the first lift amount La at the maximum, and during the compressor actuation time (Pc → Ps control time), the lift amount of the plunger 37 (and the sub valve element 17) is the second lift amount Lb.

That is, during the normal control time (Pd → Pc control time), when the solenoid portion 30A including the coil 32, the stator 33, the attractor 34, and the like is supplied with current and energized, the plunger 37 and the sub valve element 17 are attracted (upwardly) by the attractor 34, and along with the movement of the plunger 37, the main valve element 10 is moved upward (in the direction to close the valve) with the urging force of the valve-closing spring 50. Meanwhile, the suction pressure Ps introduced into the Ps inlet/outlet ports 27 from the compressor is introduced into the pressure-sensitive chamber 45 through the Ps inlet/outlet chamber 28 via the inside of the plunger 37 (i.e., the slit 37s and the gap 36 between the outer periphery of the sub valve element 17 and the plunger 37) and the like, and the bellows device 40 (the inside thereof is at a vacuum pressure) is expansively or contractively displaced in accordance with the pressure (i.e., suction pressure Ps) in the pressure-sensitive chamber 45 (contracts if the suction pressure Ps is high and expands if it is low), and the displacement is then transmitted to the main valve element 10 via the pushrod 46, the sub valve element 17, and the like, whereby the valve opening degree (i.e., clearance between the valve orifice 22 and the main valve element portion 10a) is regulated, and the pressure Pc in the crank chamber is controlled in accordance with the valve opening degree.

In this case, the main valve element 10 is always urged upward with the urging force of the valve-closing spring 50, and the sub valve element 17 is always urged downward with the urging force of a valve-opening spring 47. Therefore, the sub valve element portion 17a is in a state of being pressed against the sub valve seat portion 23 (i.e., the sub valve unit 12 is closed), and the in-valve release passage 16 is blocked within the valve body 10. Therefore, the pressure Pc in the crank chamber will not be released to the suction chamber via the in-valve release passage 16.

In contrast, during the compressor actuation time, the solenoid portion 30A is supplied with current and energized, and the plunger 37 and the sub valve element 17 are attracted (upwardly) by the attractor 34, and along with the upward movement of the plunger 37, the main valve element 10 is moved upward and the valve orifice 22 is closed by the main valve element portion 10a of the main valve element 10. After that, the plunger 37 and the sub valve element 17 are further moved upward, whereby the sub valve element 17 is caused to open the in-valve release passage 16. Thus, the pressure Pc in the crank chamber is released into the suction chamber via the in-valve release passage 16.

Specifically, until the upward movement amount of the plunger 37 (and the sub valve element 17) reaches the first lift amount La, the main valve element 10 moves in the direction to close the valve such that it follows the upward movement of the plunger 37 and the sub valve element 17 with the urging force of the valve-closing spring 50. Then, when the upward movement amount has reached the first lift amount La, the valve orifice 22 is closed by the main valve element portion 10a of the main valve element 10 (the state illustrated in Fig. 2), and, with the main valve unit 11 in the closed-valve state, the plunger 37 and the sub valve element 17 are further moved upward by the predetermined amount Ly (the state illustrated in Fig. 3). In other words, after the upward movement amount of the plunger 37 and the sub valve element 17 reaches the first lift amount La, the sub valve element 17 together with the plunger 37 is attracted by the attractor 34 until the inner flanged latch portion 37k of the plunger 37 is latched to the flanged latch portion 10k of the main valve element 10, that is, by the predetermined amount of Ly (the first lift amount La + the predetermined amount Ly = the second lift amount Lb). In such a case, the main valve element 10 remains still in the closed-valve state, while the sub valve element portion 17a of the sub valve element 17 is lifted from the sub valve seat portion 23 by the predetermined amount Ly, whereby the in-valve release passage 16 is opened. When the inner flanged latch portion 37k of the plunger 37 is latched to the flanged latch portion 10k of the main valve element 10, neither the plunger 37 nor the sub valve element 17 is lifted any further even if the solenoid portion 30A generates attraction.

As described above, in the control valve 1 of the present embodiment, since the pressure Pc in the crank chamber is released to the suction chamber via the in-valve release passage 16 during the compressor actuation time, it is possible to significantly shorten the time required to increase the discharge capacity during the compressor actuation time. In addition, since the in-valve release passage 16 is closed by the sub valve element 17 during the normal control time (i.e., Pd→Pc control time), the operation efficiency of the compressor will not decrease.

In addition, in the control valve 1 of the present embodiment, since the main valve element 10 is provided with the suction pressure passage 14 that guides the suction pressure Ps acting on the upper end of the main valve element 10 to the Ps introduction chamber 24A provided at the lower end of the main valve element 10 so that the suction pressure Ps (continuously) acts on the lower end of the main valve element 10, it is possible to cancel the influence of the refrigerant pressure acting on the main valve element 10 without increasing the size of the valve body 20, as compared to the conventional valve in which the valve body is provided with a suction pressure passage and the like, for example.

More specifically, in the control valve 1 of the present embodiment, the upper end of the main valve element 10 is adapted to have the suction pressure Ps acting thereon, the lower end of the main valve element 10 is provided with the Ps introduction chamber 24A adapted to receive the suction pressure Ps, and the main valve element 10 is provided with the suction pressure passage 14 adapted to guide the suction pressure Ps to the Ps introduction chamber 24A. Therefore, when the cross-sectional area Ab of the lower fit-inserted portion 10b of the main valve element 10, the effective opening area Ac of the valve orifice 22, and the cross-sectional area Ad of the upper fit-inserted portion 10d are equal to one another, the force in the valve-opening direction and the force in the valve-closing direction due to the refrigerant pressure acting on the main valve element 10 may be brought into balance (cancel out each other). Thus, it is less likely that the refrigerant pressure acting on the main valve element 10 adversely affects the control of the valve.

In addition, the main valve element 20 includes the tubular member 10A including the main valve element portion 10a and the like and the shaft-shaped member 10B adapted to be securely fitted into the tubular member 10A, and the suction pressure passage 14 is formed between the tubular member 10A and the shaft-shaped member 10B. Therefore, the suction pressure passage 14 can be formed with such a simple structure, and the influence of the refrigerant pressure acting on the main valve element 10 can be cancelled.

Reference Signs List

| | |
|---|---|
| 1 | Variable-capacity compressor control valve |
| 10 | Main valve element |
| 10A | Tubular member |
| 10B | Shaft-shaped member |
| 10a | Main valve element portion |
| 10b | Lower fit-inserted portion |
| 10c | Intermediate small-diameter portion |
| 10d | Upper fit-inserted portion |
| 10e | Upper small-diameter portion |
| 10f | Vertical groove |
| 10k | Flanged latch portion |
| 11 | Main valve unit |
| 12 | Sub valve unit |
| 13 | Fit-insertion hole |
| 13a | Upper large-diameter hole |
| 13b | Lower small-diameter hole |
| 14 | Suction pressure passage |
| 16 | In-valve release passage |
| 16A | Release through-hole |
| 16a | Vertical hole |
| 16b | Horizontal hole |
| 16c | Through hole |
| 17 | Sub valve element |

| 17a | Sub valve element portion |
| 17d | Communication groove |
| 18 | Insertion through-hole |
| 19B | Lower guide hole |
| 19C | Recess hole |
| 19D | Upper guide hole |
| 20 | Valve body |
| 20A | Stopper portion |
| 21 | Valve chamber |
| 22 | Valve orifice |
| 23 | Sub valve seat portion |
| 24 | Lid-like guide member |
| 24A | Ps introduction chamber |
| 25 | Pd introduction port |
| 26 | Pc inlet/outlet port |
| 27 | Ps inlet/outlet port |
| 28 | Ps inlet/outlet chamber |
| 30 | Electromagnetic actuator |
| 30A | Solenoid portion |
| 32 | Coil |
| 33 | Stator |
| 34 | Attractor |
| 37 | Plunger |
| 37s | Slit |
| 40 | Bellows device (pressure-sensitive reaction member) |
| 45 | Pressure-sensitive chamber |
| 46 | Pushrod |
| 50 | Valve-closing spring (urging member) |

**Claims**

1. A variable-capacity compressor control valve, comprising:

  a main valve element including a main valve element portion;
  a valve body including

    a valve chamber with a valve orifice, the valve orifice being adapted to be in contact with or away from the main valve element portion,
    a Ps inlet/outlet port communicating with a suction chamber of a compressor,
    a Pd introduction port arranged upstream of the valve orifice and communicating with a discharge chamber of the compressor, and
    a Pc inlet/outlet port arranged downstream of the valve orifice and communicating with a crank chamber of the compressor;

  an electromagnetic actuator adapted to move the main valve element in a direction to open or close the valve orifice;
  a pressure-sensitive chamber adapted to receive a suction pressure Ps from the compressor via the Ps inlet/outlet port; and
  a pressure-sensitive reaction member adapted to urge the main valve element in the direction to open or close the valve orifice in accordance with a pressure in the pressure-sensitive chamber,
  wherein:

    the Ps inlet/outlet port or the pressure-sensitive chamber is provided at one end of the main valve element so that the suction pressure Ps acts on the one end of the main valve element, and
    the main valve element is provided with a suction pressure passage, the suction pressure passage being adapted to guide the suction pressure Ps to a Ps introduction chamber provided at another end of the main valve element, so that the suction pressure Ps acts on the other end of the main valve element.

2. The variable-capacity compressor control valve according to claim 1,
   wherein:

   a first guide hole through which a first fit-inserted portion of the main valve element is slidably fitted and inserted is provided closer to a first end of the valve body with respect to the valve orifice;
   a second guide hole through which a second fit-inserted portion of the main valve element is slidably fitted and inserted is provided closer to a second end of the valve body with respect to the valve orifice;
   the Ps inlet/outlet port or the pressure-sensitive chamber is provided closer to a first end of the first guide hole;
   the Ps introduction chamber is provided closer to a second end of the second guide hole; and
   a cross-sectional area of the first fit-inserted portion of the main valve element, a cross-sectional area of the second fit-inserted portion of the main valve element, and an opening area of the valve orifice are equal to one another so that a force in a valve-opening direction and a force in a valve-closing direction due to a refrigerant pressure acting on the main valve element are equal to one another.

3. The variable-capacity compressor control valve according to claim 2, wherein a lid-like guide member including the second guide hole is hermetically and securely attached to the valve body to form the Ps introduction chamber.

4. The variable-capacity compressor control valve according to any one of claims 1 to 3, wherein an urging member adapted to urge the main valve element in the valve-closing direction is mounted in the Ps introduction chamber.

5. The variable-capacity compressor control valve according to any one of claims 1 to 4,
   wherein:

   the main valve element includes a tubular member including the main valve element portion and a shaft-shaped member adapted to be securely fitted into the tubular member, and
   the suction pressure passage is formed between the tubular member and the shaft-shaped member.

6. The variable-capacity compressor control valve according to claim 5, wherein the suction pressure passage is provided to extend linearly in a direction to open or close the valve orifice.

7. The variable-capacity compressor control valve according to any one of claims 1 to 6, further comprising:

   an in-valve release passage provided in the main valve element or the valve body, the in-valve release passage being adapted to release a pressure Pc in the crank chamber to the suction chamber of the compressor via the Ps inlet/outlet port; and
   a sub valve element adapted to open or close the in-valve release passage.

8. The variable-capacity compressor control valve according to claim 7, wherein the in-valve release passage is adapted to include a release through-hole shaped into a crank shape in the main valve element.

9. The variable-capacity compressor control valve according to any one of claims 1 to 4, further comprising:

   an in-valve release passage in the main valve element, the in-valve release passage being adapted to release a pressure Pc in the crank chamber to the suction chamber of the compressor via the Ps inlet/outlet port; and
   a sub valve element adapted to open or close the in-valve release passage,
   wherein:

   the main valve element includes a tubular member including the main valve element portion and a shaft-shaped member adapted to be securely fitted into the tubular member;
   the suction pressure passage is formed between the tubular member and the shaft-shaped member; and
   the in-valve release passage includes a vertical hole provided in the shaft-shaped member.

# Fig. 1

Normal Control Time

[Main Valve Element
(Pd-Pc): Open,
Sub Valve Element
(Pc-Ps): Closed]

O

1

31
31A
31a
39
38
60
32
33
44
46d
34a
47
34b
34
37
17d
36
46a
10k
29
51
37s
10e
19C(28)
13(13a)  14
52
10d
10B
16(16A)
10c
11 { 22
10a
53  16c
16b
13b
10b
50

65

30(30A)
40
42
45
41
43
46(46b)
46c
35   Lb(=La+Ly)
17b
17c
17
23 } 12
17a   Ly
37k
20A
10(10A)
28
(Ps)
27
20
19D
25A
(Pd)
25
21
10f
18
(Pc)
26
19B
24
16a
24A

## Fig. 2

During Transition To
Compressor Actuation

[Main Valve Element
 (Pd-Pc): Closed,
 Sub Valve Element
 (Pc-Ps): Closed]

# Fig. 3

Compressor
Actuation Time

[Main Valve Element
(Pd-Pc): Closed,
Sub Valve Element
(Pc-Ps): Open]

# Fig. 4

**EP 3 748 157 A1**

# INTERNATIONAL SEARCH REPORT

| International application No. |
|---|
| PCT/JP2019/000120 |

| A. CLASSIFICATION OF SUBJECT MATTER |
|---|
| Int.Cl. F04B27/18(2006.01)i, F16K31/06(2006.01)i |

According to International Patent Classification (IPC) or to both national classification and IPC

| B. FIELDS SEARCHED |
|---|
| Minimum documentation searched (classification system followed by classification symbols)<br>Int.Cl. F04B27/18, F16K31/06 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2002-303262 A (FUJIKOKI CORPORATION) 18 October 2002, paragraphs [0039]-[0079], fig. 1-4<br>& US 2002/0182087 A1, paragraphs [0059]-[0117], fig. 1-4 & EP 1247981 A2 & KR 10-2002-0079486 A | 1-4<br>5-9 |
| X<br>A | JP 2008-223482 A (TGK CO., LTD.) 25 September 2008, paragraphs [0013]-[0043], fig. 1-4<br>& WO 2008/108093 A1 | 1-2<br>3-9 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28.03.2019 | Date of mailing of the international search report<br>09.04.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5553514 B

- JP 4550651 B